# DEMANDE DE BREVET EUROPEEN

(11) **EP 4 454 944 A1**
(43) Date de publication de la demande: **30.10.2024**
(21) Numéro de dépôt: 24168775.5
(22) Date de dépôt: 05.04.2024
(51) Int. Cl.: B60P 3/00

(54) **SYSTÈME DE STOCKAGE DE COLIS DESTINÉS À LA LIVRAISON**

(30) Priorité: 25.04.2023 FR 2304149
(71) Demandeur: Renault s.a.s, 92100 Boulogne Billancourt (FR)
(72) Inventeur: GIRARDI, Lionel, 78280 GUYANCOURT (FR); GUERIN, Jean-Pierre, 78280 GUYANCOURT (FR)

(57) **Abrégé**

L'invention concerne un système de stockage (1) de colis (100) comprenant une enveloppe externe et une structure de stockage placée dans ladite enveloppe, caractérisé en ce que ladite structure de stockage comprend :
-au moins un cadre de maintien (8, 9, 10) rectangulaire délimité par quatre segments, et n-1 dalles (16) carrées et planes placées dans ledit cadre de maintien (8, 9, 10) dans un même plan, en supposant que la surface totale dudit cadre de maintien (8, 9, 10) serait complètement couverte par n dalles, chaque dalle (16) étant mobile au sein du cadre de maintien (8, 9, 10) et étant destinée à supporter un colis (100), et
- des moyens de déplacement (33, 34, 35, 36) des dalles (16) dans le cadre de maintien (8, 9, 40), permettant de déplacer une dalle sélectionnée (16) suivant le principe du jeu de taquin, pour l'acheminer vers un emplacement final commun dudit cadre de maintien (8, 9, 10).

## Description

La présente invention concerne un système de stockage de colis destinés à la livraison.

Afin de bien comprendre le positionnement des différentes pièces impliquées lorsque le système de stockage selon l'invention est embarqué dans un véhicule selon l'invention, la description est réalisée en faisant référence à un repère orthonormé direct XYZ dans lequel X est un axe longitudinal avant-arrière dudit véhicule orienté vers l'arrière, Y est un axe transversal orienté vers la droite du véhicule et Z est un axe vertical dirigé vers le haut.

Un tel système de stockage peut par exemple être embarqué dans un véhicule de livraison ou être inclus dans un appareil en libre-service. Lorsqu'il est embarqué dans un véhicule de livraison, c'est le chauffeur-livreur dudit véhicule qui assure la livraison à domicile. Lorsqu'il est inclus dans l'appareil en libre-service, le client qui peut par exemple être muni d'un code secret personnel, rentre celui-ci sur un écran dudit appareil, puis ledit appareil restitue audit client son colis.

Actuellement, le processus de livraison d'un colis renfermant un objet qui a été commandé par un client au moyen d'un véhicule de livraison comprend les étapes suivantes :
- le colis qui a été commandé est réceptionné par un organisme de transport missionné pour le livrer à ce client,
- il est ensuite chargé dans le coffre d'un véhicule de livraison avec d'autres colis à livrer, tous les colis étant positionnés de façon assez désordonnée dans ledit coffre,
- le chauffeur livreur établit grâce à son GPS, un itinéraire qui est le plus adapté possible pour livrer tous les colis aux clients concernés, en limitant les détours inutiles et en évitant au maximum les carrefours susceptibles de comporter des panneaux stop ou des feux de signalisation,
- Une fois arrivé à l'adresse d'un client, le chauffeur sélectionne manuellement et non sans mal, le colis à livrer qui est noyé parmi les autres colis stockés dans le véhicule,
- si le client est présent il réceptionne le colis, et s'il est absent le chauffeur livreur repart avec le colis, qu'il replace parmi les autres colis à livrer.

Ce processus de livraison n'est pas optimisé, car les colis sont chargés dans le véhicule de livraison sans rigueur particulière et risquent donc de facilement se mélanger. De plus, lors de certaines phases brutales de freinage ou d'accélération du véhicule, les colis vont avoir tendance à se déplacer dans le coffre du véhicule et vont donc se retrouver dans des positions aléatoires dans celui-ci. Le mélange de colis dans le véhicule va complexifier l'opération de livraison, sans compter que lesdits colis peuvent s'endommager lorsqu'ils sont brutalement déplacés dans celui-ci. Enfin, il demeure difficile de distinguer du premier coup d'oeil les colis restant à livrer lors d'une tournée et ceux revenus dans le véhicule suite à une absence d'un client à livrer.

Un système de stockage de colis selon l'invention permet de s'affranchir de tous les inconvénients rencontrés avec les systèmes de stockage de l'état de la technique.

L'invention a pour objet un système de stockage de colis comprenant une enveloppe externe et une structure de stockage placée dans ladite enveloppe. Selon l'invention, ladite structure de stockage comprend :
- au moins un cadre de maintien rectangulaire délimité par quatre segments, et n-1 dalles carrées et planes placées dans ledit cadre de maintien dans un même plan, alors que la surface totale dudit cadre de maintien serait complètement couverte par n dalles, chaque dalle étant mobile au sein du cadre de maintien et étant destinée à supporter un colis, et
- des moyens de déplacement des dalles dans le cadre de maintien , permettant de déplacer une dalle sélectionnée d'un emplacement de départ dans le cadre de maintien vers un emplacement d'arrivée commun dans ledit cadre, le déplacement de la dalle sélectionnée s'effectuant par coulissement le long de dalles voisines et/ou d'au moins un segment du cadre de maintien, et au moyen d'une succession de déplacements desdites dalles voisines contre d'autres dalles et/ou d'au moins un segment du cadre de maintien, de manière que la dalle sélectionnée progresse de proche en proche vers son emplacement d'arrivée, le déplacement des dalles dans le cadre de maintien étant possible grâce à l'ouverture créée par la dalle manquante. Un système de stockage selon l'invention peut par exemple être constitué par un appareil de distribution de colis qui serait en libre-service et qui serait accessible par un client qui aurait commandé un colis. Ce client pourrait s'identifier avec un code personnel qui lui aurait été transmis et qui ne serait valable que sur une durée donnée. En entrant son code dans l'appareil, il aurait alors accès directement à son colis. Un tel système de stockage peut également être embarqué dans un véhicule utilitaire et serait alors géré par un chauffeur-livreur qui aurait en charge la livraison de colis à des clients qui se trouveraient le long d'un parcours. Le principe d'un système de stockage selon l'invention est directement inspiré du jeu appelé le taquin, pour lequel le déplacement de pions dans un cadre rectangulaire s'effectue de proche en proche, grâce à une ouverture créée dans le cadre et ayant les dimensions d'un pion. Les pions se déplace dans le cadre en coulissant le long des autres pions ou contre un segment délimitant le cadre de façon par exemple à reconstituer une série de motifs ou de chiffres. Un système de stockage selon l'invention est structuré, car il possède une pluralité de dalles portant chacune un colis. L'accès à un colis spécifique s'effectue au moyen d'un déplacement de la dalle portant ledit colis jusqu'à un emplacement commun à partir duquel le colis peut être retiré. De cette manière, il n'existe qu'une seule sortie commune pour les colis au sein du système de stockage. Le système de stockage peut comporter plusieurs cadres de maintien superposés, portant chacun des dalles de même dimension, les dalles d'un cadre à l'autre pouvant avoir des dimensions identiques ou différentes. Les dalles sont rigides et indéformables. Les moyens de déplacement peuvent être, soit manuels, soit motorisés. Afin de lever toute ambiguïté, il est supposé que la surface totale d'un cadre de maintien serait entièrement couverte par n dalles. En ne plaçant que n-1 dalles dans ledit cadre de maintien, il se créé alors dans celui-ci une ouverture carrée ayant les dimensions de la dalle manquante.

Selon une caractéristique possible de l'invention, le cadre de maintien s'étend dans un plan horizontal et les dalles sont placées dans ledit cadre de maintien en s'étendant toutes dans le même plan horizontal, le déplacement des dalles au sein du cadre de maintien s'effectuant dans ledit plan horizontal. De cette manière, le déplacement des dalles est complètement inclus dans le cadre de maintien et il n'est donc pas nécessaire de prévoir des espaces de dégagement importants pour assurer ce déplacement.

Selon une caractéristique possible de l'invention, les dalles présentent des moyens de coulissement périphériques aptes à coopérer avec des moyens de coulissement complémentaires et périphériques de dalles voisines et des moyens de coulissement complémentaires des segments du cadre de maintien. Préférentiellement, il existe une interpénétration entre les moyens de coulissement d'une dalle et les moyens de coulissement complémentaires des autres dalles et/ou du cadre de maintien, permettant le maintien en position de chaque dalle au sein du cadre. Les dalles présentes dans un même cadre de maintien coopèrent ensemble afin de se maintenir dans ledit cadre sans l'aide d'un élément extérieur.

Selon une caractéristique possible de l'invention, chaque dalle est prolongée par au moins trois parois de retenue prenant naissance sur ladite dalle et s'étendant perpendiculairement à celle-ci, lesdites parois de retenue en combinaison avec une paroi de retenue d'une dalle voisine ou avec un segment du cadre délimitant un espace fermé dans lequel est placé le colis. Il est important que les colis qui sont chargés sur les dalles ne puissent pas glisser sur celles-ci, en sortant de celles-ci, sous peine de voir certains colis d'un même cadre de maintien se mélanger. La présence de ces parois de retenue est particulièrement requise dans le cas où le système de stockage est embarqué sur un véhicule utilitaire. En effet, à chaque coup d'accélération un peu vif ou à chaque phase de freinage un peu brutale, les colis sont susceptibles de se déplacer et donc de se mélanger dans ledit véhicule.

Selon une caractéristique possible de l'invention, les moyens de déplacement comprennent un premier bras parallèle aux deux petits côtés du cadre de maintien et apte à coulisser le long des deux grands côtés du cadre de maintien, et un deuxième bras parallèle aux deux grands côtés du cadre de maintien et apte à coulisser le long des deux petits côtés du cadre de maintien, un chariot logeant un électroaimant étant monté coulissant le long dudit premier bras et le long dudit deuxième bras en étant placée dans une zone d'intersection desdits deux bras, chaque dalle possédant un électroaimant apte à coopérer avec l'électroaimant du chariot de sorte que le déplacement dudit chariot le long d'au moins l'un desdits bras provoque un déplacement dans le même sens et avec la même amplitude de la dalle considérée. Ainsi, le chariot logeant l'électroaimant peut balayer l'intégralité de la surface du cadre de maintien. L'électroaimant du chariot qui est monté coulissant le long des deux bras, va attirer l'électroaimant d'une dalle bien identifiée se trouvant au droit dudit chariot.. Une fois que cette attraction entre les deux électroaimants a été établie, un déplacement de ce chariot le long desdits bras va entrainer un déplacement de la dalle correspondante dans le même sens et avec la même amplitude.

Selon une caractéristique possible de l'invention, les moyens de déplacement sont motorisés. De cette manière, le déplacement des dalles au sein du cadre de maintien est parfaitement maitrisé et est parfaitement reproductible et fiable. Selon une caractéristique possible de l'invention, le système de stockage comprend au moins deux cadres de maintien rectangulaires superposées et s'étendant chacun dans un plan horizontal, chaque cadre de maintien comprenant n-1 dalles carrées et planes, placées dans un même plan, alors que la surface totale de chaque cadre de maintien serait complètement couverte par n dalles, des moyens de déplacement des dalles étant associés à chacun desdits cadres de maintien. Toutes les dalles d'un même cadre de maintien ont des dimensions identiques, les dimensions des dalles d'un cadre pouvant être identiques ou différentes de celles des dalles de l'autre cadre de maintien.

Selon une caractéristique possible de l'invention, toutes les dalles d'un même cadre de maintien sont identiques, les dalles pouvant être identiques ou différentes d'un cadre de maintien à l'autre. De cette manière, dans l'hypothèse où les dalles seraient différentes d'un cadre de maintien à l'autre, le système de stockage peut supporter des colis de taille différente.

Selon une caractéristique possible de l'invention, l'enveloppe externe est rigide et robuste, et comporte une trappe d'accès, l'emplacement d'arrivée commun pour chaque cadre de maintien étant accessible par la trappe d'accès sans que les autres dalles du système de stockage ne soient accessibles. De cette manière, un client venant retirer son colis avec un code d'accès spécifique, pour accéder à son colis sans pouvoir accéder aux autres colis. De même, si un chauffeur livreur venait de retirer le colis à livrer, un individu mal intentionné ne pourrait pas avoir accès aux autres colis.

L'invention a pour autre objet un procédé de livraison des colis au moyen d'un système de stockage selon l'invention, ledit système de stockage étant embarqué dans un véhicule.

Selon l'invention, le procédé comprend les étapes suivantes :
- Une étape de placement du véhicule en mode chargement sur une interface véhicule,
- Une étape de dépôt des colis sur les différentes dalles se présentant au chauffeur livreur, chaque dalle qui est chargée avec un colis s'effaçant dans le cadre de maintien pour laisser place à une dalle vierge qui sera elle-même chargée, et ainsi de suite,

- une étape d'appairage de chaque colis à une dalle donnée via un système de reconnaissance de type RFID,
- Une étape d'envoi des adresses de livraison à un outil GPS qui va lui-même sélectionner le parcours le plus adapté,
- Une étape d'envoi d'une alerte au client pour lui signaler l'heure envisagée pour la livraison,
- Une étape de sélection, puis de déplacement de la dalle portant le colis à livrer jusqu'à l'emplacement final commun,
- Une étape de retrait du colis par une trappe d'accès de l'enveloppe externe ne permettant d'avoir accès qu'à l'emplacement final commun de la dalle,
- Une étape de livraison au client de son colis.

Un tel procédé de livraison présente l'avantage d'être entièrement automatisé, éliminant ainsi les risques d'erreurs de livraison et permettant ainsi de gagner du temps. De plus, il a l'avantage d'être sécurisé car il ne permet pas à une personne mal intentionnée de pouvoir avoir accès aux autres colis stockés dans le véhicule, dans le cas d'une absence momentanée du chauffeur-livreur entrain de livrer un colis à un client.

On donne ci-après une description détaillée d'un mode de réalisation préféré d'un système de stockage de colis selon l'invention, en se référant aux figures suivantes :
[Fig. 1] La figure 1 est une vue de côté d'un véhicule de livraison de colis comprenant un système de stockage selon l'invention,
[Fig. 2] La figure 2 est une en perspective de trois cadres de maintien superposés d'un système de stockage selon l'invention, supportant chacun des dalles et des colis,
[Fig. 3] La figure 3 est une vue de dessus d'un cadre de maintien d'un système de stockage selon l'invention comprenant des dalles et des moyens de déplacement desdites dalles,
[Fig. 4] La figure 4 est une vue de dessus d'un cadre de maintien et de moyens de déplacement de dalles d'un système de stockage selon l'invention,
[Fig. 5] La figure 5 est une vue en perspective d'un coin d'un cadre de maintien d'un système de stockage selon l'invention, détaillant les moyens de déplacement des dalles,
[Fig. 6] La figure 6 est une vue en perspective d'un cadre de maintien d'un système de stockage selon l'invention, montrant des réglettes de coulissement,
[Fig. 7] La figure 7 est une vue du dessus d'une dalle d'un système de stockage selon l'invention,
[Fig. 8] La figure 8 est une vue du dessous de la dalle de la figure 7,
[Fig. 9] La figure 9 est une vue en perspective de la dalle des figures 7 et 8.
[Fig. 10] La figure 10 est une vue de face de la façade arrière du véhicule de la figure 1.

Un système de stockage 1 de colis selon l'invention peut par exemple être constitué par un appareil de distribution de colis, qui serait en libre-service et qui serait accessible par un client qui aurait commandé un colis. Ce client pourrait s'identifier avec un code personnel qui lui aurait été transmis par l'organisme de livraison en charge de son colis, et qui ne serait valable que sur une durée donnée. En entrant son code dans l'appareil, il aurait alors accès directement à son colis sans avoir accès aux autres colis stockés dans l'appareil. Un tel système de stockage 1 pourrait également être embarqué dans un véhicule utilitaire de livraison, et serait alors géré par un chauffeur-livreur qui aurait en charge la livraison des colis à domicile, à des clients bien identifiés.

La description détaillée qui va suivre est effectuée en supposant que le système de stockage 1 de colis selon l'invention, est embarqué dans un véhicule utilitaire 2 de livraison.

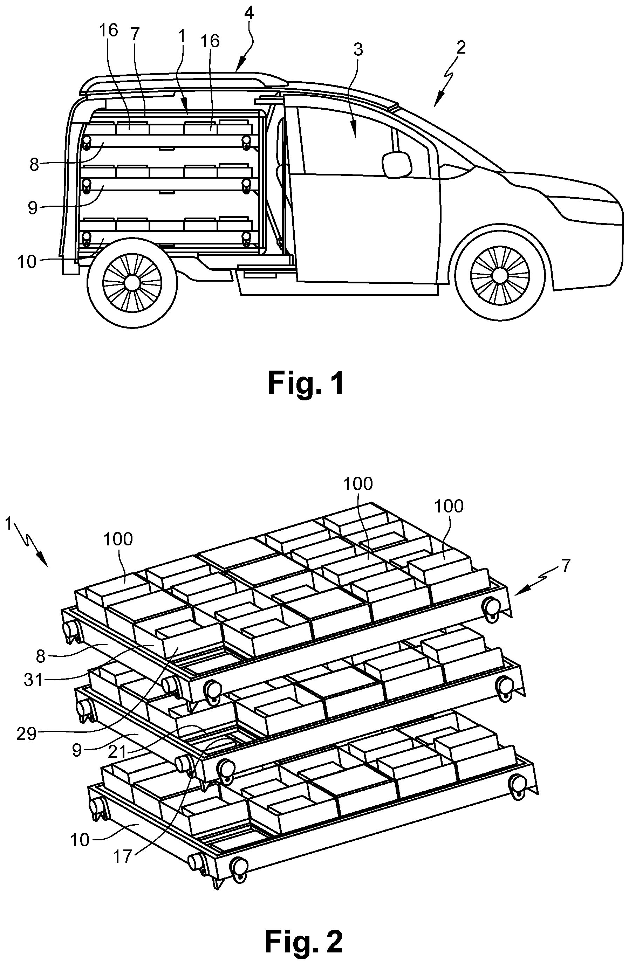

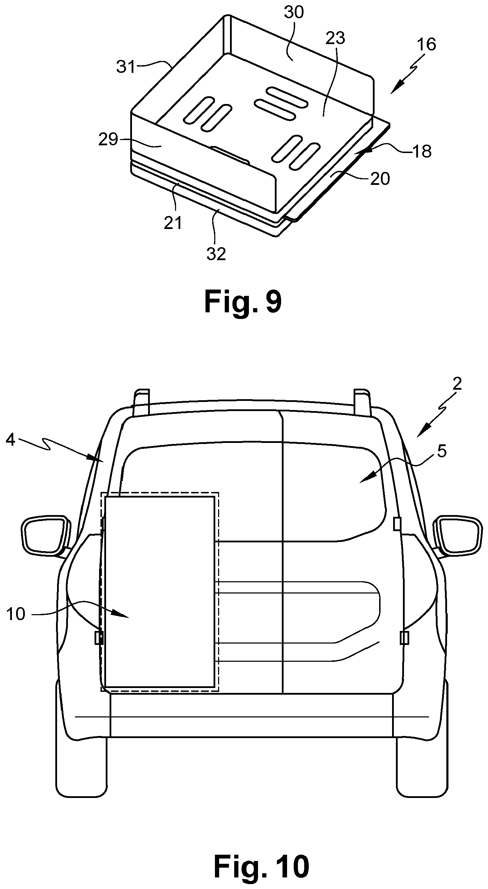

En se référant aux figures 1 et 10, le véhicule utilitaire 2 de livraison comprend schématiquement un habitacle avant 3 pouvant comporter deux ou trois sièges alignés suivant un axe transversal Y du véhicule et un espace de stockage arrière 4 placé juste derrière l'habitacle avant 3. Cet espace de stockage 4 est placé dans la continuité de l'habitacle avant 3, et est accessible par une porte latérale coulissante s'étendant dans un plan longitudinal et vertical XZ du véhicule et/ou par une porte arrière 5 s'étendant dans un plan transversal et vertical YZ dudit véhicule. La porte latérale coulissante et la porte arrière 5 possèdent chacune une serrure et peuvent donc se fermer à clé de manière à empêcher quiconque, à l'exception du chauffeur-livreur, d'avoir accès au contenu de l'espace de stockage 4. La porte arrière 5 peut par exemple être montée mobile en rotation autour d'un axe vertical situé dans l'un des deux côtés de caisse du véhicule.

En se référant à la figure 10, la porte arrière 5 comprend une trappe d'accès 6 de plus petite dimension que ladite porte d'accès et dotée d'une serrure. La trappe d'accès 6 est montée mobile en rotation sur la porte arrière 5 entre une position de fermeture pour laquelle elle est dans la continuité de ladite porte arrière, et une position d'ouverture pour laquelle elle s'étend vers l'arrière du véhicule et permet d'accéder à une zone particulière de l'espace de stockage 4 dudit véhicule. Seul le chauffeur-livreur et éventuellement son employeur, détient la clé de la trappe d'accès 6.

En se référant aux figures 1 et 2, un système de stockage 1 selon l'invention, comprend une structure de stockage comportant un bâti 7 constitué de différentes barres horizontales et verticales, et trois cadres 8, 9, 10 de maintien supportés par les barres dudit bâti 7.

En se référant aux figure 2, 3 et 6, chaque cadre de maintien 8, 9, 10 est de forme rectangulaire, et possède donc deux grands segments 11, 12 rectilignes parallèles, et deux petits segments 13, 14 rectilignes parallèles, lesdits grands segments 11, 12 étant perpendiculaires auxdits petits segments 13, 14. Chacun de ces segments 11, 12, 13, 14 est plan et de faible épaisseur, et est disposé dans le véhicule 2 de manière à s'étendre dans un plan vertical, les deux grands segments 11, 12 s'étendant dans un plan longitudinal et vertical XZ du véhicule, et les deux petits segments 13, 14 s'étendant dans un plan transversal et vertical YZ du véhicule.

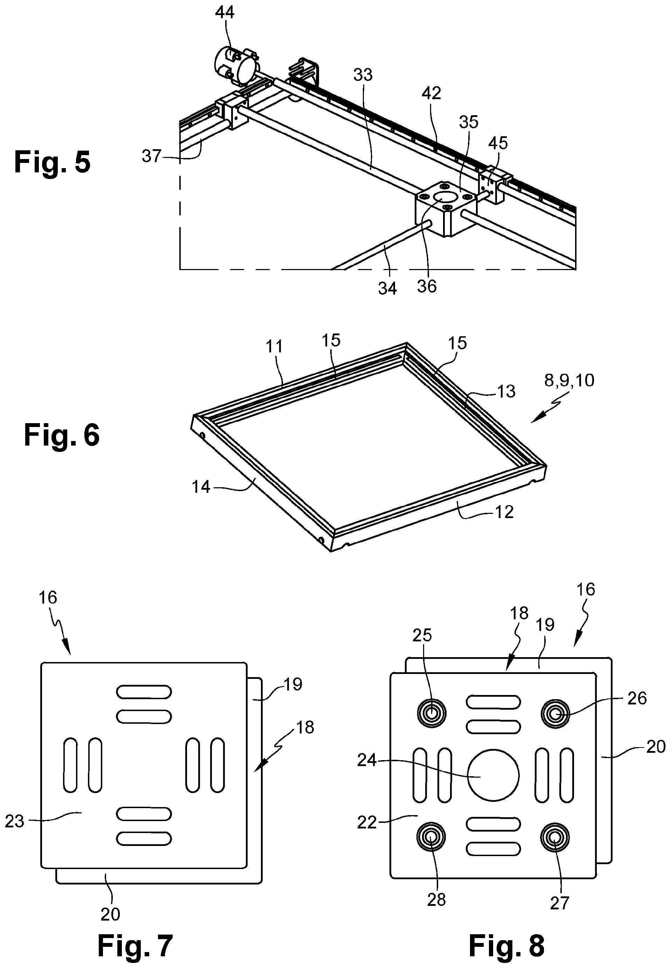

En se référant à la figure 6, les quatre segments 11, 12, 13, 14 présentent chacun une surface interne de laquelle émerge une réglette de glissement 15, ladite réglette de glissement 15 s'étendant sur toute la longueur de ladite surface interne. Les surfaces internes des deux grands segments 11, 12 se font face et les surfaces internes des deux petits segments 13, 14 se font également face. Les réglettes de glissement des quatre segments 11, 12, 13, 14 du cadre de maintien 8, 9, 10 s'étendent vers l'intérieur dudit cadre de maintien 11, 12, 13, 14.

En se référant aux figures 1 et 2, les trois cadres 8, 9, 10 de maintien sont superposés et parallèles, et s'étendent chacun dans un plan horizontal. Chacun de ces cadres de maintien 8, 9, 10 est occupé par une pluralité de dalles 16 solides, ayant un contour carré et étant de faible épaisseur, préférentiellement inférieure à 5cm. Ces dalles 16 sont rectilignes, et chaque cadre 8, 9, 10 contient des dalles 16 de même dimension, les dimensions desdites dalles 16 pouvant variées d'un cadre de maintien 8, 9, 10 à l'autre. Chacune de ces dalles 16 est destinée à ne porter qu'un seul colis 100, ou plusieurs colis de plus petite taille destinés à un même client. Les dalles 16 sont montées dans un cadre de maintien 8, 9, 10 de manière à se retrouver au contact les unes des autres et à s'étendre dans un même plan. Ainsi certaines dalles 16 d'un même cadre de maintien 8, 9, 10 ne sont entourées que par d'autres dalles 16, d'autres dalles 16 peuvent venir au contact d'un seul segment 11, 12, 13, 14 dudit cadre de maintien 8, 9, 10 et certaines autres dalles 16, celles qui sont placées dans les coins, peuvent venir au contact de deux segments 11, 12, 13, 14 consécutifs de ce cadre de maintien 8, 9, 10. Si chaque cadre de maintien 8, 9, 10 est apte à recevoir au maximum n dalles carrées 16 couvrant la totalité de la surface dudit cadre de maintien 8, 9, 10, seulement n-1 dalles 16 sont montées dans ledit cadre 8, 9, 10. De cette manière, chaque cadre de maintien 8, 9, 10 est doté d'une ouverture 17 ayant les dimensions de la dalle 16 manquante. Au sein d'un même cadre de maintien 8, 9, 10, grâce à la présence de cette ouverture 17, les dalles 16 sont déplaçables en translation le long des autres dalles 16 et le long des segments 11, 12, 13, 14 dudit cadre de maintien 8, 9, 10. Le déplacement des dalles 16 dans le cadre de maintien 8, 9, 10 d'un système de stockage selon l'invention, reprend le principe du jeu de taquin, pour lequel le déplacement de pastilles dans un cadre rectangulaire dans le but par exemple de reconstituer une série de chiffres, s'effectue de proche en proche en déplaçant les pastilles les unes contre les autres, grâce à une ouverture créée dans le cadre et ayant les dimensions d'une pastille.

En se référant aux figures 7 et 8, chaque dalle 16 possède un talon de glissement 18 sous la forme d'une extension de matière constituée de deux tronçons plans 19, 20 disposés à 90° l'un de l'autre et dans la continuité l'un de l'autre. Autrement dit, cette extension de matière a une forme en L. Cette extension de matière prolonge deux bords consécutifs de la dalle 16, alors que les deux autres bords consécutifs de ladite dalle 16 disposent chacun d'une fente 21 rectiligne s'étendant sur toute leur longueur, lesdites deux fentes 21 étant disposées l'une par rapport à l'autre en étant perpendiculaires. Pour résumer, chaque dalle 16 comporte une partie mâle constituée par l'extension de matière en forme de L, et une partie femelle constituée par les deux fentes 21 perpendiculaires. A l'intérieur d'un même cadre de maintien 8, 9, 10, au moins un tronçon d'extension 19, 20 d'une dalle 16 est inséré dans une fente 21 d'une dalle voisine 16, et les fentes 21 de certaines autres dalles 16 sont occupées par une réglette de glissement 15 du cadre de maintien 8, 9, 10.

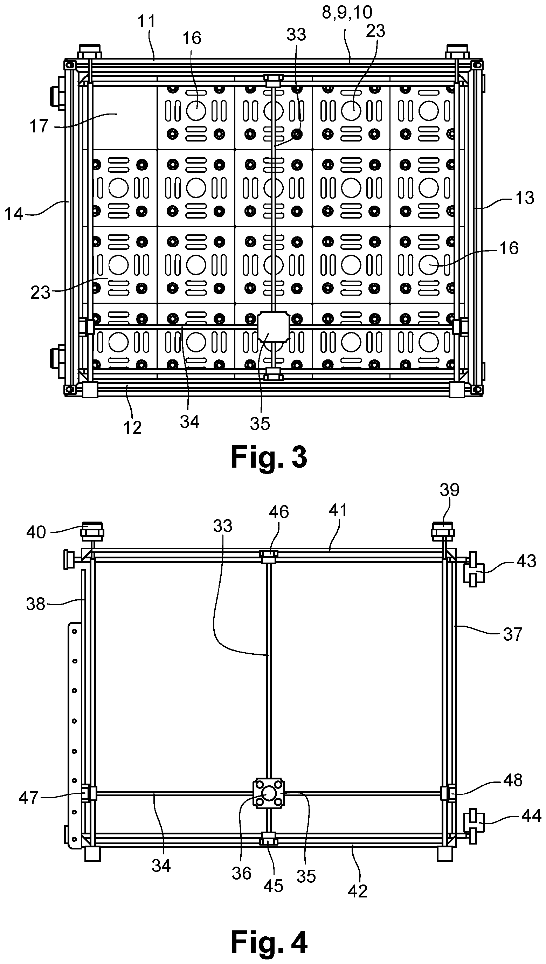

En se référant à la figure 3, n'importe quelle dalle 16 d'un cadre de maintien donné 8, 9, 10 peut ainsi être acheminée à un emplacement précis dudit cadre 8, 9, 10 en étant déplacée en translation le long des autres dalles 16 voisines ou contre un segment 11, 12, 13, 14 dudit cadre de maintien 8, 9, 10, après que lesdites dalles 16 voisines aient été elles-mêmes déplacées en translation le long d'autres dalles 16 voisines ou contre un segment 11, 12, 13, 14 , du cadre de maintien 8, 9, 10, etc. De cette manière, la dalle sélectionnée 16 portant le colis à livrer va se déplacer de proche en proche dans le cadre de maintien 8, 9, 10 après que des dalles voisines 16 aient été elles-mêmes déplacées contre des dalles voisines, etc.

En se référant aux figures 3, 4 et 5, chaque dalle 16 comprend une face inférieure 22 et une face supérieure 23 parallèles entre elles et s'étendant chacune dans un plan horizontal, ladite face supérieure 23 étant placée au-dessus de la face inférieure 22. La face inférieure 22 comprend un électroaimant 24 de forme cylindrique et quatre butées 25, 26, 27, 28 à billes de portage, ledit électroaimant 24 étant placé au centre de la face inférieure 22 et les quatre butées 25, 26, 27, 28 étant réparties aux quatre coins de ladite face inférieure 22. En se référant à la figure 9, chaque dalle 16 comprend trois parois 29, 30, 31 de retenue du colis 100, prenant naissance sur la face supérieure 23 de la dalle 16 et s'étendant verticalement, en étant perpendiculaires à ladite face supérieure 23. Ces trois parois de retenue 29, 30, 31 comprennent deux parois parallèles 29, 30 et une paroi de liaison 31 joignant lesdites deux parois parallèles 29, 30 en étant perpendiculaire à celles-ci. Chaque dalle 16 est posée sur une dalle support 32 possédant des ouvertures pour recevoir les quatre butées à billes de portage et l'électroaimant.

En se référant aux figures 3, 4 et 5, des moyens de déplacement des dalles 16 sont associés à chaque cadre de maintien 8, 9, 10 pour acheminer une dalle sélectionnée 16 du cadre de maintien concerné 8, 9, 10, de son emplacement initial vers un emplacement final commun pour toutes les dalles 16 didot cadre de maintien 8, 9, 10. Schématiquement, les moyens de déplacement comprennent un premier bras 33 parallèle aux deux petits segments13 14 du cadre de maintien 8, 9, 10 et apte à coulisser le long des deux grands segments 11, 12 du cadre de maintien 8, 9, 10, et un deuxième bras parallèle 34 parallèle aux deux grands segments 11, 12 du cadre de maintien 8, 9, 10 et apte à coulisser le long des deux petits segments 13, 14 du cadre de maintien 8, 9, 10. Les moyens de déplacement comportent également un chariot 35 logeant un électroaimant 36 et monté coulissant le long dudit premier bras 33 et le long dudit deuxième bras 34 en étant placée dans une zone d'intersection desdits deux bras 33, 34. De cette manière, l'électroaimant 36 placé dans le chariot 35 est capable de balayer toute la surface du cadre de maintien 8, 9, 10 considéré. L'électroaimant 36 du chariot 35 est destiné à coopérer avec l'électroaimant 24 d'une dalle 16 sélectionnée, de manière à pouvoir déplacer ladite dalle sélectionnée 16. En effet, un phénomène d'attraction va s'opérer entre l'électroaimant 36 du chariot 35 et l'électroaimant 24 de la dalle sélectionnée 16, le déplacement de l'électroaimant 36 du chariot 35 entrainant un déplacement de la dalle sélectionnée 16 dans le même sens et avec la même amplitude.

En se référant aux figures 4 et 5, deux vis 37, 38 sans fin s'étendent parallèlement aux petits segments 13, 14 du cadre de maintien 8, 9, 10 en étant placées à côté de ceux-ci. A chacune de ces vis sans fin 37, 38 est associé un moteur électrique 39, 40 dont le déclenchement fait tourner ladite vis sans fin 37, 38 autour de son axe de révolution. De même, deux vis 41, 42 sans fin s'étendent parallèlement aux grands segments 11, 12 du cadre de maintien 8, 9, 10 en étant placées à côté de ceux-ci. A chacune de ces vis sans fin 41, 42 est associé un moteur électrique 43, 44 dont le déclenchement fait tourner ladite vis sans fin 41, 42 autour de son axe de révolution. Le premier bras 33 se termine à chacune de ses deux extrémités par un guide rail 45, 46 et une noix de vis sans fin monté sur une vis sans fin 41, 42 parallèle aux grands segments 11, 12 du cadre de maintien 8, 9, 10. De même, le deuxième bras 34 se termine à chacune de ses deux extrémités par un guide rail 47, 48 et une noix de vis sans fin monté sur une vis sans fin 37, 38 parallèle aux petits segments 13, 14 du cadre de maintien 8, 9, 10. Lorsque les deux moteurs 39, 40, 43, 44 de deux vis sans fin 37, 38, 41, 42 parallèles sont déclenchés, lesdites vis sans fin 37, 38, 41, 42 vont se mettre à tourner, entrainant une translation des deux guides rail 45, 46, 47, 48 terminant le premier bras 33 ou le deuxième bras 34 le long desdites vis sans fin 37, 38, 41, 42, et donc une translation dudit premier bras 33 et/ou dudit deuxième bras 34.

Un procédé de livraison de colis à partir d'un système de stockage 1 selon l'invention, comprend les étapes suivantes :
- Une étape de placement du véhicule 2 en mode chargement sur une interface véhicule,
- Une étape de dépôt des colis 100 sur les différentes dalles 16 des cadres de maintien 8, 9, 10 se présentant au chauffeur livreur, chaque dalle 16 qui est chargée avec un colis s'effaçant dans le cadre de maintien pour laisser place à une dalle vierge qui sera elle-même chargée, et ainsi de suite,
- une étape d'appairage de chaque colis 100 à une dalle donnée 16 via un système de reconnaissance de type RFID,
- Une étape d'envoi des adresses de livraison à un outil GPS qui va lui-même sélectionner le parcours le plus adapté,
- Une étape d'envoi d'une alerte au client pour lui signaler l'heure précise envisagée pour la livraison de son colis 100,
- Une étape de sélection, puis de déplacement de la dalle 16 portant le colis 100 à livrer jusqu'à un emplacement final commun situé dans le cadre de maintien 8, 9, 10 considéré, ledit déplacement étant provoqué par l'électroaimant 36 du chariot 35 interagissant avec l'électroaimant 24 des différentes dalles 16 impliquées dans le déplacement de la dalle sélectionnée 16. Les moyens de déplacement des dalles 16 d'un même cadre de maintien 8, 9, 10 sont programmés pour acheminer n'importe quelle dalle 16 dudit cadre de maintien 8, 9, 10 à un emplacement précis et commun de ce cadre de maintien 8, 9, 10.
- Une étape de retrait du colis 100 par le chauffeur-livreur au moyen de l'ouverture de la trappe d'accès 6 de la porte arrière 5 ne permettant de n'avoir accès qu'à la dalle sélectionnée 16 portant le colis 100,
- Une étape de livraison du colis 100 au client.

## Revendications

1. Système de stockage (1) de colis (100) comprenant une enveloppe externe et une structure de stockage placée dans ladite enveloppe, **caractérisé en ce que** ladite structure de stockage comprend :
- au moins un cadre de maintien (8, 9, 10) rectangulaire délimité par quatre segments, et n-1 dalles (16) carrées et planes placées dans ledit cadre de maintien (8, 9, 10) dans un même plan, alors que la surface totale dudit cadre de maintien (8, 9, 10) serait complètement couverte par n dalles, chaque dalle (16) étant mobile au sein du cadre de maintien (8, 9, 10) et étant destinée à supporter un colis (100), et
- des moyens de déplacement (33, 34, 35, 36) des dalles (16) dans le cadre de maintien (8, 9, 10), permettant de déplacer une dalle sélectionnée (16) d'un emplacement de départ dans le cadre de maintien vers un emplacement d'arrivée commun dans ledit cadre (8, 9, 10), le déplacement de la dalle sélectionnée (16) s'effectuant par coulissement le long de dalles voisines (16) et/ou d'au moins un segment (11, 12, 13, 14) du cadre de maintien (8, 9, 10), et au moyen d'une succession de déplacements desdites dalles voisines (16) contre d'autres dalles (16) et/ou d'au moins un segment (11, 12, 13, 14) du cadre de maintien (8, 9, 10), de manière que la dalle sélectionnée (16) progresse de proche en proche vers son emplacement d'arrivée, le déplacement des dalles (16) dans le cadre de maintien (8, 9, 10) étant possible grâce à l'ouverture créée par la dalle manquante.(16).

2. Système de stockage selon la revendication 1, **caractérisé en ce que** le cadre de maintien (8, 9, 10) s'étend dans un plan horizontal et les dalles (16) sont placées dans ledit cadre de maintien (8, 9, 10) en s'étendant toutes dans le même plan horizontal, et **en ce que** le déplacement des dalles (16) au sein du cadre de maintien (8, 9, 10) s'effectue dans ledit plan horizontal.

3. Système de stockage selon l'une quelconque des revendications 1 ou 2, **caractérisé en ce que** les dalles (16) présentent des moyens de coulissement périphériques (18, 19, 20, 21) aptes à coopérer avec des moyens de coulissement complémentaires et périphériques (18, 19, 20, 21) de dalles voisines (16) et des moyens de coulissement complémentaires (15) des segments (11, 12, 13, 14) du cadre de maintien (8, 9, 10).

4. Système de stockage selon l'une quelconque des revendications 1 à 3, **caractérisé en ce que** chaque dalle (16) est prolongée par au moins trois paroi de retenue (29, 30, 31) prenant naissance sur ladite dalle (16) et s'étendant perpendiculairement à celle-ci, lesdites parois de retenue (29, 30, 31) en combinaison avec une paroi de retenue (29, 30, 31) d'une dalle voisine (16) ou avec un segment (11, 12, 13, 14) du cadre de maintien (8, 9, 10), délimitant un espace fermé dans lequel est placé le colis (100).

5. Système de stockage selon l'une quelconque des revendications 1 à 4, **caractérisé en ce que** les moyens de déplacement comprennent un premier bras (33) parallèle aux deux petits côtés (13, 14) du cadre de maintien (8, 9, 10) et apte à coulisser le long des deux grands côtés (11, 12) du cadre de maintien (8, 9, 10), et un deuxième bras (34) parallèle aux deux grands côtés (13, 14) du cadre de maintien (8, 9, 10) et apte à coulisser le long des deux petits côtés (13, 14) du cadre de maintien (8, 9, 10), et **en ce que** qu'un chariot (35) logeant un électroaimant (36) est monté coulissant le long dudit premier bras (33) et le long dudit deuxième bras (34) en étant placée dans une zone d'intersection desdits deux bras (33, 34), chaque dalle (16) possédant un électroaimant (24) apte à coopérer avec l'électroaimant (36) du chariot (35) de sorte que le déplacement dudit chariot (35) le long d'au moins l'un desdits bras (33, 34) provoque un déplacement dans le même sens et avec la même amplitude de la dalle (16) considérée.

6. Système de stockage selon l'une quelconque des revendications 1 à 5, **caractérisé en ce que** les moyens de déplacement (33, 34, 35, 36) sont motorisés.

7. Système de stockage selon l'une quelconque des revendications 1 à 6, **caractérisé en ce qu'**il comprend au moins deux cadres de maintien (8, 9, 10) rectangulaires superposées et s'étendant chacun dans un plan horizontal, et **en ce que** chaque cadre de maintien (8, 9, 10) comprend n-1 dalles (16) carrées et planes placées dans un même plan, alors que la surface totale de chaque cadre de maintien (8, 9, 10) serait complètement couverte par n dalles (16), des moyens de déplacement (33, 34, 35, 36) des dalles (16) étant associés à chacun desdits cadres de maintien (8, 9, 10).

8. Système de stockage selon la revendication 7, **caractérisé en ce que** toutes les dalles (16) d'un même cadre de maintien (8, 9, 10) sont identiques, les dalles pouvant être identiques ou différentes d'un cadre de maintien (8, 9, 10) à l'autre.

9. Système de stockage selon l'une quelconque des revendications 1 à 8, **caractérisé en ce que** l'enveloppe externe est rigide et robuste, et comporte une trappe d'accès (10), et **en ce que** l'emplacement d'arrivée commun dans chaque cadre de maintien est accessible par la trappe d'accès (10) sans que les autres dalles (16) du même cadre de maintien ne soient accessibles.

10. Procédé de livraison des colis au moyen d'un système de stockage (1) selon l'une quelconque des revendications 1 à 9 embarqué dans un véhicule, **caractérisé en ce qu'**il comprend les étapes suivantes :
- Une étape de placement du véhicule (2) en mode chargement sur une interface véhicule,
- Une étape de dépôt des colis (100) sur les différentes dalles (16) se présentant au chauffeur livreur, chaque dalle (16) qui est chargée avec un colis (100) s'effaçant dans le cadre de maintien (8, 9, 10) pour laisser place à une dalle (16) vierge qui sera elle-même chargée, et ainsi de suite,
- une étape d'appairage de chaque colis (100) à une dalle donnée (16) via un système de reconnaissance de type RFID,
- Une étape d'envoi des adresses de livraison à un outil GPS qui va lui-même sélectionner le parcours le plus adapté,
- Une étape d'envoi d'une alerte au client pour lui signaler l'heure envisagée pour la livraison,
- Une étape de sélection, puis de déplacement de la dalle (16) portant le colis à livrer jusqu'à l'emplacement final commun,
- Une étape de retrait du colis (100) par une trappe d'accès (10) de l'enveloppe externe ne permettant d'avoir accès qu'à l'emplacement final de la dalle (16),
- Une étape de livraison au client de son colis.
